# EUROPÄISCHE PATENTSCHRIFT

(11) **EP 2 408 584 B1**
(45) Veröffentlichungstag und Bekanntmachung des Hinweises auf die Patenterteilung: **18.12.2013**
(21) Anmeldenummer: 10716270.3
(22) Anmeldetag: 15.03.2010
(51) Int. Cl.: B23K 20/12, F01D 5/34

(54) **VERFAHREN ZUM HERSTELLEN EINES INTEGRAL BESCHAUFELTEN ROTORS, ROTOR SOWIE VORRICHTUNG ZUR DURCHFÜHRUNG DES VERFAHRENS**
METHOD FOR PRODUCING AN INTEGRALLY BLADED ROTOR, ROTOR AND APPARATUS FOR CARRYING OUT THE METHOD
PROCÉDÉ DE FABRICATION D'UN ROTOR À AUBAGE D'UN SEUL TENANT, ROTOR ET DISPOSITIF POUR METTRE EN UVRE LE PROCÉDÉ

(30) Priorität: 16.03.2009 DE 102009013401
(43) Veröffentlichungstag der Anmeldung: 25.01.2012
(73) Patentinhaber: MTU Aero Engines AG, 80995 München (DE)
(72) Erfinder: KNOTT, Ulrich, 80997 München (DE); KLINGELS, Hermann, 85221 Dachau (DE); UIHLEIN, Thomas, 85221 Dachau (DE); HELM, Dietmar, 85757 Karlsfeld (DE)
(86) Internationale Anmeldenummer: PCT/DE2010/000268
(87) Internationale Veröffentlichungsnummer: WO 2010/105596

(56) Entgegenhaltungen:
- DE-A1-102005 019 356
- DE-A1-102005 026 505
- DE-A1-102007 036 972
- US-A1- 2008 016 688

## Beschreibung

Die Erfindung betrifft ein Verfahren zum Herstellen eines integral beschaufelten Rotors, insbesondere eines Gasturbinenrotors, mit einem Rotorgrundkörper und einer Schaufeleinheit.

Darüber hinaus betrifft die vorliegende Erfindung einen entsprechend hergestellten Rotor selbst sowie eine Vorrichtung zur Durchführung des erfindungsgemäßen Verfahrens.

Gasturbinenrotoren mit integraler Beschaufelung bezeichnet man abhängig davon, ob ein im Querschnitt scheibenförmiger oder ein im Querschnitt ringförmiger Rotor bzw. Rotorträger (im folgenden Rotorgrundkörper genannt) vorhanden ist, als Blisk bzw. Bling. Blisk ist die Grundform von bladed disk und Bling von bladed ring.

Aus dem Stand der Technik ist es bekannt, Gasturbinenrotoren mit integraler Beschaufelung durch Fräsen aus dem Vollen herzustellen, was natürlich sehr aufwendig und teuer ist, weshalb dieses Verfahren nur für relativ kleine Gasturbinenrotoren Verwendung gefunden hat.

Ein anderes, bei großen Rotoren Anwendung findendes Verfahren ist das Reibschweißen. Dabei werden der Rotorgrundkörper und die Schaufeln separat hergestellt und anschließend miteinander reibverschweißt insbesondere durch Linearreibschweißen. DE 102005019356 offenbart ein solches Verfahren, wobei ein Rotorgrunderkörper und eine Schaufeleinheit über einen Zwischenstück mittels Linearreibschweißens miteinander verbunden werden. Ein anderes Schweißverfahren ist das induktive Hochfrequenzpressschweißen, welches in diesem Zusammenhang auch Anwendung findet. Ein Vorteil des Herstellens mittels Schweißen besteht darin, dass Rotorgrundkörper und Turbinenschaufeln aus unterschiedlichen Materialien hergestellt werden können, die den unterschiedlichen Anforderungen dieser Abschnitte des Rotors anpassbar sind. Schwierig ist die Ausrichtung der Schaufeln zum Rotorgrundkörper beim Fügen, insbesondere beim Reibschweißen, bei dem eines der beiden Teile relativ zum anderen bewegt werden muss.

Aufgabe der Erfindung ist es, ein Verfahren zum Herstellen eines integral beschaufelten Rotors zu schaffen, mit dem die Turbinenschaufeln in sehr engen Toleranzen und damit positionsgenau am Rotorgrundkörper angebracht werden. Darüber hinaus soll eine möglichst einfache Vorrichtung zur Durchführung des Verfahrens angegeben werden.

Das erfindungsgemäße Verfahren sieht hierzu vor, dass Rotorgrundkörper und Schaufeleinheit über einen Zwischenkörper durch Rotationsschweißen verbunden werden, indem der Rotorgrundkörper und die Schaufeleinheit mit radialem Spalt positioniert werden, der Zwischenkörper koaxial fluchtend zum Spalt positioniert wird, und durch axiale sowie rotatorische Relativbewegung der zu verbindenden Teile relativ zum Zwischenkörper letzterer in den Spalt bewegt und simultan mit den zu verbindenden Teilen verschweißt wird.

Alternativ hierzu wird jeweils durch axiale sowie rotatorische Relativbewegung der Zwischenkörper zunächst mit einem ersten der zu verbindenden Teile (Rotorgrundkörper und Schaufeleinheit) verschweißt und danach, als integrale Einheit mit diesem Teil, mit dem zweiten der zu verbindenden Teile verschweißt.

Während im Stand der Technik die Rotorschaufeln direkt an den Rotorgrundkörper angeschweißt wurden und damit eine Relativbewegung dieser beiden Teile zueinander erfolgen musste, sieht die Erfindung vor, einen vorgefertigten Zwischenkörper durch Rotationsschweißen sozusagen als Brücke zwischen Rotorgrundkörper und Schaufeleinheit an beiden Einheiten festzuschweißen. Eine Relativbewegung zwischen Rotorgrundkörper und Schaufeleinheit beim Schweißen ist deshalb nicht mehr notwendig, diese beiden Teile können vorab fest zueinander positioniert werden. Die beim Reibschweißen auftretende Toleranz der zueinander bewegten Teile beeinflusst beim erfindungsgemäßen Verfahren nicht die Relativposition zwischen Rotorgrundkörper und Schaufeleinheit, so dass für die Lage des Zwischenkörpers im verschweißten Zustand größere Toleranzen akzeptabel sind. Darüber hinaus werden Rotorgrundkörper und Schaufeleinheit beim Schweißvorgang weniger belastet.

Wie bereits erläutert, wird gemäß der bevorzugten Ausführungsform nur der Zwischenkörper gedreht, wogegen die anderen beiden Einheiten unbewegt bleiben.

Die Schaufeleinheit ist gemäß der bevorzugten Ausführungsform ein geschlossener Schaufelkranz, das heißt, sie besteht aus einem Ringkörper und einstückig angeformten Schaufeln. Damit steht ein geschlossener Ringspalt zur Unterbringung des Zwischenkörpers zur Verfügung. Alternativ hierzu könnten natürlich auch mehrere Rotorschaufeln über ein Ringsegment einstückig miteinander verbunden sein, wobei die Ringsegmente über den Zwischenkörper miteinander verbunden werden. Darüber hinaus könnten sich theoretisch auch einzelne Laufschaufeln über verbreitete Laufschaufelfüße zu einem Ring ergänzen und sozusagen einzeln an den Zwischenkörper angeschweißt werden.

Der Spalt sollte in Zustellrichtung des Zwischenteils enger werden, um durch die Zustellung eine zunehmend größere Reibkraft zu erzeugen.

Besonders vorteilhaft ist es, wenn der Spalt kontinuierlich enger wird.

Der Spalt kann beispielsweise konisch, wellenförmig oder treppenförmig enger werden, das heißt, die entsprechenden Fügeflächen an den zu verschweißenden Teilen haben daraufhin abgestimmte Geometrien.

Auch der Zwischenkörper kann oder sollte entsprechend angepasste Geometrien besitzen. Damit hätte der Zwischenkörper einen im weitesten Sinne doppelkonusförmigen Querschnitt.

Die einzelnen oder segmentweise zusammengefassten Rotorschaufeln bilden dann zusammen die Schaufeleinheit.

Die den Spalt definierenden Fügeflächen des Rotorgrundkörpers und der Schaufeleinheit können, müssen jedoch nicht symmetrisch zur Axialrichtung geneigt sein. Durch unterschiedliche Neigungen lässt sich nämlich eine unterschiedliche Reibkraft an den Fügeflächen erzielen, was gegebenenfalls, abhängig von den einzelnen Materialien, vorteilhaft sein kann. Materialien und Reibkraft sind entsprechend einander anzupassen.

Wie bereits zuvor erwähnt, sollte der Zwischenkörper eine auf die Spaltgeometrie abgestimmte, insbesondere der Spaltgeometrie entsprechende eigene Geometrie, aufweisen.

Die Schaufeleinheit ist insbesondere ein geschlossener Schaufelkranz, wie bereits erläutert. Dabei kann dieser Schaufelkranz zum Beispiel integral gefertigt sein oder durch geeignete Verfahren, zum Beispiel Hochtemperaturlöten oder EB-Schweißen, ein aus Einzelteilen zusammengesetzter Ring sein.

Rotorgrundkörper und Schaufeleinheit sind bevorzugt aus unterschiedlichen Materialien.

Dies gilt auch für den Zwischenkörper. Der Zwischenkörper lässt sich nämlich auch aus unterschiedlichen Materialien im Bereich der Fügeflächen zusammensetzen, um ein Reibschweißen mit den angrenzenden Teilen sicherzustellen. Als Werkstoffe für den Zwischenkörper kommen alle rotationsreibschweißgeeigneten Nickelbasis-Legierungen in Frage, wobei der Zwischenkörper natürlich auch, wie erwähnt, ein sogenanntes Dual Alloy oder ein gradierter Werkstoff sein kann, der vorab aus geeigneten Werkstoffen hergestellt wird.

Vorteilhaft kann es auch sein, die zu verschweißenden Schaufeln oder, allgemeiner, die Schaufeleinheit, im Bereich der Fügefläche ganz oder selektiv durch Rekristallisation zu modifizieren. In diesem Zusammenhang hat sich herausgestellt, dass eine radiale Rekristallisationstiefe von mindestens 0,5 mm besonders geeignet ist.

Durch die Erfindung lassen sich auch Einkristall-Rotorschaufeln mit polykristallinen Rotorgrundkörpern verbinden.

Das erfindungsgemäße Verfahren sieht vor, dass die Schaufeleinheit in einer Vorrichtung lagefest und formschlüssig gehalten wird, während der Reibschweißvorgang erfolgt.

Beim zweiten Verfahren, das zunächst die Herstellung einer integralen Einheit aus Zwischenkörper und einem ersten der zu verbindenden Teile vorsieht, wird der Zwischenkörper nach dem Anschweißen an den ersten der zu verbindenden Teile zum Teil, vorzugsweise zu mehr als 50 Prozent seines Volumens, abgetragen. Dabei wird die noch benötigte Fügefläche zum Anschweißen des zweiten Teiles gefertigt. Zu beachten ist, dass der zunächst als selbsttragender, an die Belastungen beim Rotationsschweißen angepasst ausgeführte Zwischenkörper dann natürlich soweit abgetragen werden kann, dass sein Volumen allein gegebenenfalls den Belastungen beim Rotationsschweißen nicht mehr gewachsen wäre. Aber, nachdem er mit dem ersten Teil ja eine vorgefertigte Einheit bildet, kann diese Einheit dann die beim Schweißen auftretenden Kräfte ohne weiteres aufnehmen.

Die erfindungsgemäße Vorrichtung zur Durchführung des vorerwähnten Verfahrens umfasst eine Halterung für den Rotorgrundkörper und die Schaufeleinheit, Verdrehsicherungen für Rotorgrundkörper und Schaufeleinheit sowie eine drehbare und axial zustellbare Halterung für den Zwischenkörper.

Über die Halterung erfolgt die Lagepositionierung und Zentrierung der Teile zueinander, die Verdrehsicherungen halten die Teile beim Zustellen des rotierenden Zwischenkörpers.

Wenn die Vorrichtung in Zustellrichtung nach dem Spalt eine Ausnehmung besitzt, besteht keine Gefahr, dass der Zwischenkörper beim Durchdringen des Spaltes die Vorrichtung kontaktiert.

Die Verdrehsicherung für die Schaufeleinheit greift vorzugsweise formschlüssig in diese ein, was zwischen den Schaufeln und/oder an einem Ringabschnitt des Schaufelkranzes der Fall sein kann.

Darüber hinaus sollte eine Zentriervorrichtung für den Rotorgrundkörper und für die Schaufeleinheit vorhanden sein.

Die Erfindung beschreibt schließlich auch einen integral beschaufelten Rotor, insbesondere für Gasturbinen, der nach dem erfindungsgemäßen Verfahren hergestellt wird und ein Zwischenteil besitzt, das durch Reibschweißen einen Spalt zwischen dem Rotorgrundkörper und der Schaufeleinheit überbrückt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Halbschnitt durch eine erfindungsgemäße Vorrichtung mit eingesetztem Rotor, in der integral beschaufelte Rotoren nach dem erfindungsgemäßen Verfahren hergestellt werden,
Figur 2 einen Halbschnitt durch eine zweite Ausführungsform der erfindungsgemäßen Vorrichtung, bei der ebenfalls das erfindungsgemäße Verfahren durchgeführt werden kann,
Figuren 3a und 3b je eine vergrößerte Ansicht des Rotors im Bereich des Spalts, und
Figur 4 einen schematischen Teillängsschnitt durch eine temporäre Zwischenbaugruppe des erfindungsgemäßen Rotors.

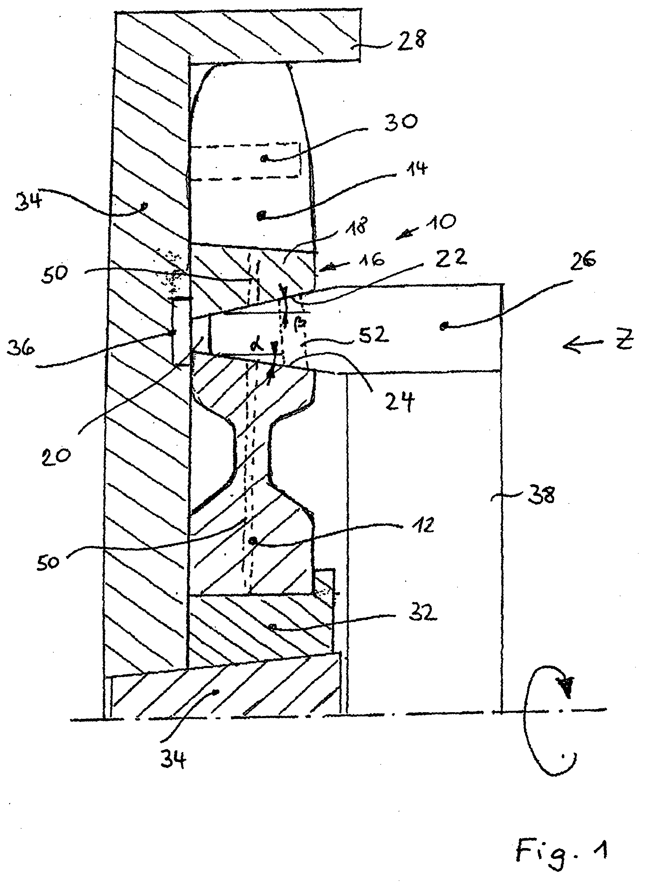

In Figur 1 ist eine Vorrichtung zum Herstellen eines integral beschaufelten Rotors 10, vorliegend eines Gasturbinenrotors, dargestellt. Der Rotor 10 kann dabei im Verdichter oder Turbinenbereich der Gasturbine eingesetzt werden. Der Rotor 10 weist einen Rotorgrundkörper in Form einer Scheibe oder eines Rings auf, der auch Rotorträger genannt wird. Am Rotorgrundkörper 12 werden die Turbinenschaufeln 14 befestigt. Die Turbinenschaufeln 14 sind einstückiger Bestandteil eines geschlossenen Schaufelkranzes. Im folgenden wird in diesem Zusammenhang der Einfachheit halber nur von einer Schaufeleinheit 16 gesprochen.

Die Schaufeleinheit 16 hat einen radial inneren Ringkörper 18, von welchem aus sich die Turbinenschaufeln 14 radial nach außen erstrecken. Der Ringkörper 18 und die Turbinenschaufeln 14 können einstückig aus dem Vollen gemeinsam gefräst werden oder aus mehreren Bestandteilen bestehen und miteinander verbunden werden. Dies kann durch ein Hochtemperaturlötverfahren oder ein Schweißverfahren (zum Beispiel EB-Schweißen) erfolgen.

Wie Figur 1 zu entnehmen ist, ist ein Ringspalt 20 zwischen dem Rotorgrundkörper 12 und der Schaufeleinheit 16 vorhanden, die entsprechenden Fügeflächen 22 und 24 sind radial voneinander beabstandet. Dieser Spalt 20 wird von einem vorgefertigten, starren Zwischenkörper 26 überbrückt, der durch Rotationsreibschweißen an dem Rotorgrundkörper 12 und der Schaufeleinheit 16 angebracht wird und den Spalt 20 überbrückt, so dass sich ein integral beschaufelter Rotor 10 ergibt.

Die Fügeflächen 22, 24 laufen in axialer Zustellrichtung Z des Zwischenkörpers 26 kontinuierlich konisch zu, so dass sich der Spalt radial zunehmend und kontinuierlich verringert.

Auch der Zwischenkörper 26 hat eine entsprechend angepasste, doppelkonische Querschnittsform.

Die Fügeflächen 22, 24 sind zu ihren zugeordneten Fügeflächen am Zwischenkörper 26 im Querschnitt betrachtet, vorzugsweise parallel.

Bei der gezeigten Ausführungsform sind darüber hinaus die Fügeflächen 22, 24 symmetrisch zur Axialrichtung geneigt, das heißt die Winkel α und β sind vom Betrag her gleich. Alternativ können die Winkel auch ungleich sein, um bei unterschiedlichen Materialeigenschaften die Kräfte besser anpassen zukönnen.

Die Vorrichtung selbst umfasst eine radial äußere Zentriervorrichtung 28 in Form eines Absatzes, an dem innenseitig die radial äußere Stirnfläche der Turbinenschaufeln 14 anliegen. Darüber hinaus ist eine Verdrehsicherung 30 in Form von einem oder mehreren Vorsprüngen vorgesehen, die zwischen benachbarte Turbinenschaufeln 14 ragen und eine Drehung der Schaufeleinheit 16 verhindert bzw. verhindern.

Der Rotorgrundkörper 12 wird über einen Spannring 32, der auf einem axial verschieblichen Konus 34 sitzt, zentriert und lagefest, auch gegen Drehung, in der Vorrichtung gehalten, das heißt Spannring 32 und Konus 34 bilden auch eine Verdrehsicherung.

In Axialrichtung stoßen Rotorgrundkörper 12 und Schaufeleinheit 16 gegen eine Wand 34 der Vorrichtung, so dass sie auch in Axialrichtung exakt zueinander und in der Vorrichtung positioniert und gehalten werden. Die Wand 34 besitzt in Zustellrichtung Z nach dem Spalt 20 eine ringförmige Ausnehmung 36, die in Radialrichtung größer als das angrenzende Ende des Spaltes 20 ist.

Der Zwischenkörper 26 wird auf einer drehbaren und axial zustellbaren Halterung 38 befestigt. Der Zwischenkörper 26 ist gemäß der dargestellten Ausführungsform ein ringförmiges, vorgefertigtes Element.

Im folgenden wird die Herstellung des Rotors 10 kurz erläutert. Nach dem Einsetzen von Rotorgrundkörper 12 und Schaufeleinheit 16 sowie Fixieren dieser Teile in der Vorrichtung wird der an der Halterung 38 befestigte Zwischenkörper 26 in Rotation versetzt und in Zustellrichtung Z in den Spalt 20 gedrückt, wobei der Zwischenkörper 26 koaxial fluchtend zum Spalt 20 ausgerichtet ist. Die Winkel α und β sind gleich oder ungleich und auf die zu erzielende Reibung abgestimmt. Ab einer bestimmten Zustellkraft und der daraus resultierenden Reibkraft kommt es zum vorzugsweise simultanen Verschweißen der drei Teile, wobei dann natürlich der Zwischenkörper 26 den Spalt 20 überbrückt und vorzugsweise vollständig ausfüllt. Verglichen mit der Situation in Figur 1, die den ersten Kontakt des Zwischenkörpers 26 mit den Fügeflächen 22, 24 zeigt, wird der Zwischenkörper 26 dann im weiteren Verlauf des Verfahrens folglich noch weiter in Zustellrichtung Z bewegt. Die Ausnehmung 36 verhindert, das der durch den Spalt 20 hindurchtretende Zwischenkörper 26 die Vorrichtung berührt und sie beschädigt oder an sie angeschweißt wird.

Während des Schweißvorgangs bleiben Rotorgrundkörper 12 und Schaufeleinheit 16 lagefest und drehen nicht mit.

Rotorgrundkörper 12 und Schaufeleinheit 16 sind vorzugsweise aus unterschiedlichen Materialien, wobei auch der Zwischenkörper 26 aus verschiedenen Materialien bestehen kann, die an die Materialien der angrenzenden Teile des Rotors 10 angepasst sind. Folglich kann der Zwischenkörper 26 ein Dual Alloy oder gradierter Werkstoff sein. Als Werkstoffe können dabei zum Beispiel die rotationsreibschweißgeeigneten Nickelbasis-Legierungen Anwendung finden.

Darüber hinaus lässt sich auch die Schaufeleinheit 16 an ihrer Fügefläche modifizieren, und zwar durch Rekristallisation. Hier kann die gesamte Fügefläche 22 oder nur einzelne Abschnitte rekristallisiert werden, und zwar vorzugsweise bei einer Mindestrekristallisationstiefe von 0,5 mm.

Nach dem Verschweißen des Zwischenkörpers 26 wird dieser von der Halterung 38 gelöst. Der vom hergestellten Rotor 10 abstehende Stumpf des Zwischenkörpers 26 wird dann abgedreht.

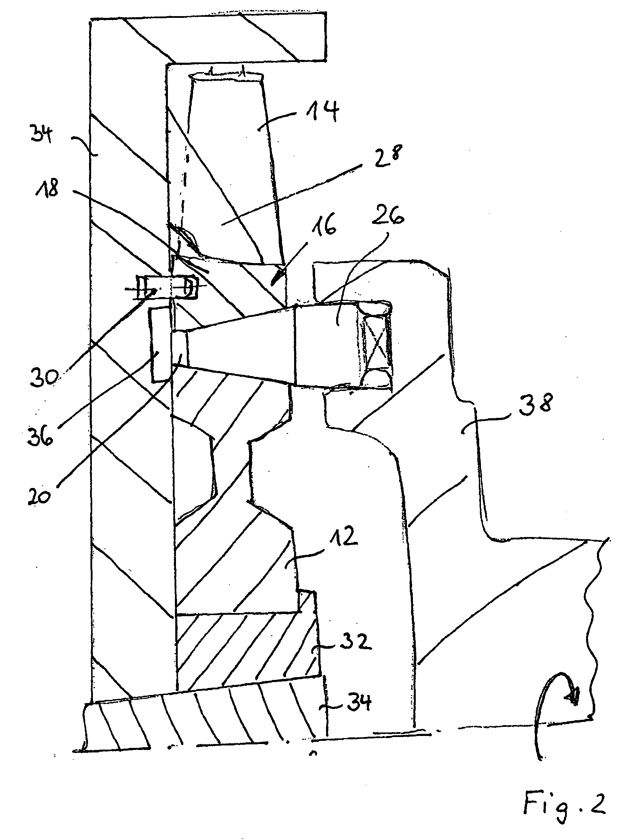

Die Ausführungsform nach Figur 2 entspricht im wesentlichen der gemäß Figur 1, so dass im folgenden nur auf die Unterschiede eingegangen werden muss. Bei dieser Ausführungsform ist die Halterung 38 etwas modifiziert ausgebildet, denn der Zwischenkörper 26 wird axial in eine entsprechende Ausnehmung der Halterung 38 gesteckt und darin fixiert. Darüber hinaus wird die Schaufeleinheit 16 im Bereich des in Umfangsrichtung durchgehenden Ringkörpers 18 drehgesichert, indem eine Verdrehsicherung 30, zum Beispiel ein Vorsprung oder ein Stift, in eine entsprechende stirnseitige Ausnehmung des Ringkörpers 18 ragt. Eine entsprechende formschlüssige Drehsicherung kann natürlich auch für den Rotorgrundkörper 12 vorgesehen sein.

Für die Zentrierung der Schaufeleinheit 16 sorgt eine Zentriervorrichtung 28 in Form von Vorsprüngen, die an der Außenseite des Ringkörpers 18 anliegt und damit zwischen den Turbinenschaufeln 14 liegt.

Die übrigen bereits mit Bezug auf Figur 1 eingeführten Bezugszeichen werden auch hier wieder für gleiche oder funktionsgleiche Teile verwendet, so dass die Vorrichtung nach Figur 2 nicht weiter im Detail erläutert werden muss. Neben dem Spannring 32 kann natürlich auch im Nabenbereich des Rotorgrundkörpers 12 eine Drehmomentverbindung vorgesehen sein.

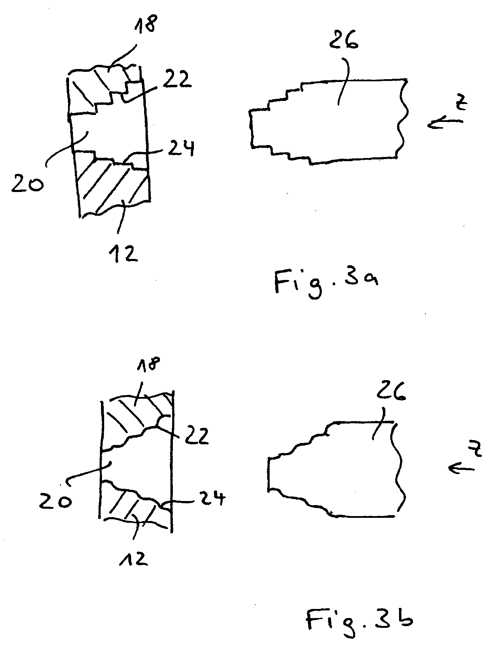

Figur 3a zeigt eine Variante, bei der der Spalt 20 treppenstufenförmig in Zustellrichtung Z enger wird und der Zwischenkörper 26 eine komplementäre Form besitzt.

Bei der Ausführungsform nach Figur 3b verengt sich der Spalt 20 im Querschnitt gesehen wellenförmig, auch hier hat der Zwischenkörper 26 eine komplementäre Gestalt.

Alternativ zur Arretierung der Schaufeleinheit 16 kann zusätzlich zu mechanischen Spannund Fixiervorrichtungen die Schaufeleinheit 16 mit einer niedrigschmelzenden metallischen Eingießmasse (zum Beispiel Zinn-Wismut) oder Kunststoff in die Vorrichtung eingegossen werden. Diese Masse wird nach dem Fügevorgang in geeigneter Weise wieder entfernt.

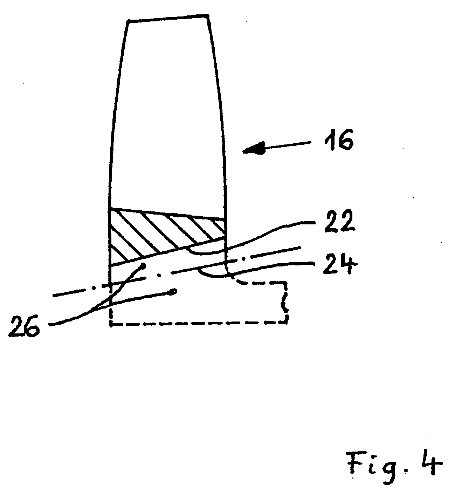

Figur 4 zeigt einen Teillängsschnitt durch eine Schaufeleinheit 16, welche an einer Fügefläche 22 bereits mit einem Zwischenkörper 26 verschweißt ist. Die Darstellung betrifft eine Verfahrensvariante, bei welcher der Zwischenkörper 26 zuerst mit einem der zu verbindenden Körper, hier der Schaufeleinheit 16, und später mit dem zweiten zu verbindenden Körper, hier dem Rotorgrundkörper (nicht dargestellt) verschweißt wird. Der Zwischenkörper 26 ist durch eine selbsttragende, massive Bauweise an die Belastungen beim Rotationsreibschweißen angepasst. Sobald er mit der Schaufeleinheit 16 verschweißt ist, kann ein Großteil seines Volumens z.B. durch Drehen entfernt werden, wobei die anschließend benötigte Fügefläche 24 gefertigt wird, siehe hierzu den gestrichelt dargestellten, zu entfernenden Teil des Zwischenkörpers 26 unterhalb der strichpunktierten Fügefläche 24. Die Fügeflächen 22 und 24 können die gleiche Konusrichtung und gegebenenfalls den gleichen Konuswinkel aufweisen. Dadurch können die Fügeflächen 22 und 24 radial sehr nahe zusammenrücken, so dass bezüglich des herzustellenden Rotors Gewicht und radiale Bauhöhe eingespart werden können. Diese zeitlich aufwendigere Verfahrensvariante mit zwei separaten Rotationsreibschweißvorgängen und Zwischenbearbeitung hat noch den Vorteil, dass das separate Verschweißen des Zwischenkörpers 26 mit dem in der Regel geschmiedeten Rotorgrundkörper einerseits und mit den in der Regel gegossenen Schaufeln andererseits verfahrenstechnisch leichter beherrschbar ist, da die Verfahrensparameter unterschiedlich gewählt und somit besser optimiert werden können.

Darüber hinaus ist zu betonen, dass der erfindungsgemäße Rotor 10 und das erfindungsgemäße Verfahren auch bei gekühlten Rotoren einsetzbar ist. Hierzu weisen beispielsweise Rotorgrundkörper 12 und Schaufeleinheit 16 geeignete Kühlkanäle 50 auf (siehe Figur 1). Der Zwischenkörper 26 besitzt ebenfalls, jedoch etwas größere, Kühlkanäle 52, um unabhängig von seiner Eintauchtiefe in den Spalt 20 auf jeden Fall die Kanäle 50 miteinander zu verbinden.

Es wäre auch im Sinne der Erfindung, die Fügeflächen am Rotorgrundkörper und der Schaufeleinheit parallel und axial, d. h. mit in Zustellrichtung des Zwischenkörpers konstantem Radialspalt zueinander anzuordnen. Der Zwischenkörper hätte dann auch parallele, axiale Fügeflächen, wobei seine radiale Dicke zur Erzeugung einer Anpresskraft geringfügig größer sein müsste, als die radiale Spaltweite

## Patentansprüche

1. Verfahren zum Herstellen eines integral beschaufelten Rotors (10), insbesondere eines Gasturbinenrotors, mit einem Rotorgrundkörper (12) und einer Schaufeleinheit (16), wobei Rotorgrundkörper (12) und Schaufeleinheit (16) über einen Zwischenkörper (26) durch Rotationsreibschweißen verbunden werden, der Rotorgrundkörper (12) und die Schaufeleinheit (16) aus unterschiedlichen Materialien hergestellt sind, indem
A) der Rotorgrundkörper (12) und die Schaufeleinheit (16) mit radialem Spalt (20) positioniert werden, der Zwischenkörper (26) koaxial fluchtend zum Spalt (20) positioniert wird, und durch axiale sowie rotatorische Relativbewegung der zu verbindenden Teile (12, 16) relativ zum Zwischenkörper (26) letzterer (26) in den Spalt (20) bewegt und simultan mit den zu verbindenden Teilen (12, 16) verschweißt wird, oder indem
B) jeweils durch axiale sowie rotatorische Relativbewegung der Zwischenkörper (26) zunächst mit einem ersten (12 oder 16) der zu verbindenden Teile verschweißt wird und danach, als integrale Einheit mit diesem Teil (12 oder 16), mit dem zweiten (16 oder 12) der zu verbindenden Teile verschweißt wird, **dadurch gekennzeichnet, dass** die den Spalt (20) definierenden Fügeflächen (22, 24) des Rotorgrundkörpers (12) und der Schaufeleinheit (16) asymmetrisch zur Axialrichtung geneigt sind.

2. Verfahren nach Anspruch 1, **dadurch gekennzeichnet, dass** der Zwischenkörper (26) gedreht und axial in den Spalt (20) bewegt wird, um mit Rotorgrundkörper (12) und Schaufeleinheit (16) reibverschweißt zu werden.

3. Verfahren nach Anspruch 1 oder 2, **dadurch gekennzeichnet, dass** der Spalt (20) in Zustellrichtung (Z) des Zwischenkörpers (26) enger wird, oder konstant sowie radial geringfügig kleiner als der Zwischenkörper verläuft.

4. Verfahren nach einem der vorhergehenden Ansprüche, **dadurch gekennzeichnet, dass** der Spalt (20) in Zustellrichtung konisch, wellenförmig oder treppenstufenförmig enger wird.

5. Verfahren nach einem der vorhergehenden Ansprüche, **dadurch gekennzeichnet, dass** der Zwischenkörper (26) eine auf die Spaltgeometrie abgestimmte, insbesondere der Spaltgeometrie entsprechende Geometrie aufweist.

6. Verfahren nach einem der vorhergehenden Ansprüche, **dadurch gekennzeichnet, dass** die Schaufeleinheit (16) ein geschlossener Schaufelkranz ist.

7. Verfahren nach einem der vorhergehenden Ansprüche, **dadurch gekennzeichnet, dass** der Zwischenkörper (26) an seinen entgegengesetzten Fügeflächen aus unterschiedlichen Materialien besteht.

8. Verfahren nach einem der vorhergehenden Ansprüche, **dadurch gekennzeichnet, dass** die Schaufeleinheit (16) während des Reibschweißens in einer Vorrichtung lagefest formschlüssig gehalten wird.

9. Verfahren nach einem der vorhergehenden Ansprüche, **dadurch gekennzeichnet, dass** die Schaufeleinheit (16) eine den Spalt (20) mitdefinierende Fügefläche (22) aufweist und in diesem Bereich zumindest abschnittsweise rekristallisiert wird.

10. Verfahren nach einem der vorhergehenden Ansprüche, **dadurch gekennzeichnet, dass** der zunächst als selbsttragender, an die Belastungen beim Rotationsreibschweißen angepasst ausgeführte Zwischenkörper (26) nach dem Verschweißen mit einem ersten (12 oder 16) der zu verbindenden Teile und vor dem Verschweißen mit dem zweiten (16 oder 12) der zu verbindenden Teile zum Teil, vorzugsweise zu mehr als 50% seines Volumens. abgetragen wird. und dabei eine noch benötigte Fügefläche (22 oder 24) gefertigt wird.

11. Integral beschaufelter Rotor, insbesondere Gasturbinenrotor, hergestellt nach einem der Ansprüche 1 bis 10, mit einem Rotorgrundkörper (12) und einer Schaufeleinheit (16), wobei Rotorgrundkörper (12) und Schaufeleinheit (16) über einen Zwischenkörper (26) durch Rotationsreibschweißen verbunden werden, der Rotorgrundkörper (12) und die Schaufeleinheit (16) aus unterschiedlichen Materialien hergestellt sind und **dadurch gekennzeichnet, daß** die Fügeflächen (22,24) des Rotorgrundkörpers (12) und der Schaufeleinheit (16) asymmetrisch zur Axialrichtung geneigt sind.

## Claims

1. Method for producing an integrally bladed rotor (10), in particular a gas turbine rotor, having a rotor base body (12) and a blade unit (16), wherein the rotor base body (12) and the blade unit (16) are connected by way of an intermediate body (26) by means of rotary friction welding,
the rotor base body (12) and the blade unit (16) are produced from different materials,
in that
A) the rotor base body (12) and the blade unit (16) are positioned with a radial gap (20), the intermediate body (26) is positioned in coaxial alignment with the gap (20), and by means of axial and also rotatory relative movement of the portions (12, 16) that are to be connected relative to the intermediate body (26) the latter (26) is moved into the gap (20) and is simultaneously welded with the portions (12, 16) that are to be connected, or in that
B) in each case by means of axial and also rotatory relative movement the intermediate body (26) is first welded with a first portion (12 or 16) of the portions to be connected and afterwards, as an integral unit with this portion (12 or 16), is welded with the second portion (16 or 12) of the portions to be connected,
**characterised in that** the joint surfaces (22, 24) of the rotor base body (12) and the blade unit (16) that define the gap (20) are inclined asymmetrically in relation to the axial direction.

2. Method according to claim 1, **characterised in that** the intermediate body (26) is turned and moved axially into the gap (20) in order to be friction-welded with the rotor base body (12) and the blade unit (16).

3. Method according to claim 1 or 2, **characterised in that** the gap (20) becomes narrower in the direction of feed (Z) of the intermediate body (26) or extends so as to be constant and also radially slightly smaller than the intermediate body.

4. Method according to one of the preceding claims, **characterised in that** in the feed direction the gap (20) becomes narrower in a conical, undulating or stepped manner.

5. Method according to one of the preceding claims, **characterised in that** the intermediate body (26) has a geometry that is matched to the geometry of the gap, in particular corresponds to the geometry of the gap.

6. Method according to one of the preceding claims, **characterised in that** the blade unit (16) is a closed blade ring.

7. Method according to one of the preceding claims, **characterised in that** the intermediate body (26) consists of different materials on its opposing joint surfaces.

8. Method according to one of the preceding claims, **characterised in that** the blade unit (16) is held in a device in a positionally fixed and form-closing manner during the friction welding.

9. Method according to one of the preceding claims, **characterised in that** the blade unit (16) has a joint surface (22) co-defining the gap (20) and is recrystallized at least in sections in this region.

10. Method according to one of the preceding claims, **characterised in that** the intermediate body (26), which in the first instance is constructed to be self-supporting and so as to be adapted to the loads during the rotary friction welding, is abraded in part, preferably to more than 50% of its volume, after the welding with a first portion (12 or 16) of the portions to be connected and prior to the welding with the second portion (16 or 12) of the portions to be connected, and a joint surface (22 or 24) that is further required is produced thereby.

11. An integrally bladed rotor, in particular a gas turbine rotor, produced according to one of claims 1 to 10, having a rotor base body (12) and a blade unit (16), wherein the rotor base body (12) and the blade unit (16) are connected by way of an intermediate body (26) by means of rotary friction welding, the rotor base body (12) and the blade unit (16) are produced from different materials, and **characterised in that** the joint surfaces (22, 24) of the rotor base body (12) and the blade unit (16) are inclined asymmetrically in relation to the axial direction.

## Revendications

1. Procédé de fabrication d'un rotor (10) à aubage d'un seul tenant, en particulier d'un rotor de turbine à gaz, avec un corps de base (12) du rotor et une unité d'aubage (16), le corps de base (12) du rotor et l'unité d'aubage (16) étant assemblés au moyen d'un corps intermédiaire (26) par soudage par friction rotative, le corps de base (12) du rotor et l'unité d'aubage (16) étant fabriqués avec des matériaux différents,
A) le corps de base (12) du rotor et l'unité d'aubage (16) étant positionnés avec une fente (20) radiale, le corps intermédiaire (26) étant positionné en alignement coaxial par rapport à la fente (20), et ce dernier (26) étant inséré dans la fente (20) par déplacement axial et rotatoire des pièces (12, 16) à assembler par rapport au corps intermédiaire (26) tout en étant simultanément soudé aux pièces (12, 16) à assembler ou
B) respectivement par déplacement axial et rotatoire, le corps intermédiaire (26) étant d'abord soudé à une première (12 ou 16) des pièces à assembler avant d'être soudé à la deuxième (16 ou 12) des pièces à assembler en tant qu'unité intégrée à cette pièce (12 ou 16),
**caractérisé en ce que** les surfaces d'assemblage (22, 24) du corps de base (12) du rotor et de l'unité d'aubage (16) qui définissent la fente (20) sont inclinées symétriquement par rapport à la direction axiale.

2. Procédé selon la revendication 1, **caractérisé en ce que** le corps intermédiaire (26) est tourné et axialement inséré dans la fente (20), pour être soudé par friction au corps de base (12) du rotor et à l'unité d'aubage (16).

3. Procédé selon la revendication 1 ou 2, **caractérisé en ce que** la fente (20) se rétrécit dans la direction d'avance (Z) du corps intermédiaire (26), ou s'étend constamment et radialement légèrement inférieure au corps intermédiaire.

4. Procédé selon l'une des revendications précédentes, **caractérisé en ce que** la fente (20) se rétrécit en forme de cône, d'onde ou d'escalier dans la direction d'avance.

5. Procédé selon l'une des revendications précédentes, **caractérisé en ce que** le corps intermédiaire (26) présente une géométrie ajustée à la géométrie de fente, correspondant en particulier à la geométrie de fente.

6. Procédé selon l'une des revendications précédentes, **caractérisé en ce que** l'unité d'aubage (16) est une couronne d'aubes fermée.

7. Procécé selon l'une des revendications précédentes, **caractérisé en ce que** le corps intermédiaire (26) est constitué de matériaux différents sur ses surfaces d'assemblage opposées.

8. Procédé selon l'une des revendications précédentes, **caractérisé en ce que** l'unité d'aubage (16) est maintenue dans une position fixe par correspondance de forme dans un dispositif en cours de soudage.

9. Procédé selon l'une des revendications précédentes, **caractérisé en ce que** l'unité d'aubage (16) présente une surface d'assemblage (22) définissant conjointement la fente (20), et est au moins partiellement recristallisée dans cette zone.

10. Procédé selon l'une des revendications précédentes, **caractérisé en ce que** le corps intermédiaire (26) d'abord réalisé comme corps intermédiaire autoportant adapté aux contraintes du soudage rotatif est, après soudage à une première (12 ou 16) des pièces à assembler et avant soudage à la deuxième (16 ou 12) des pièces à assembler, partiellement érodé, préférentiellement pour plus de 50% de son volume, et **en ce qu'**une surface d'assemblage (22 ou 24) encore nécessitée est alors réalisée.

11. Rotor à aubage d'un seul tenant, en particulier rotor de turbine à gaz, fabriqué selon l'une des revendications 1 à 10, avec un corps de base (12) du rotor et une unité d'aubage (16), le corps de base (12) du rotor et l'unité d'aubage (16) étant assemblés au moyen d'un corps intermédiaire (26) par soudage par friction rotative, le corps de base (12) du rotor et l'unité d'aubage (16) étant fabriqués avec des matériaux différents, et **caractérisé en ce que** les surfaces d'assemblage (22, 24) du corps de base (12) du rotor et de l'unité d'aubage (16) sont inclinées asymétriquement par rapport à la direction axiale.
